# EUROPEAN PATENT APPLICATION

(11) **EP 4 342 311 A1**
(43) Date of publication of application: **27.03.2024**
(21) Application number: 22197537.8
(22) Date of filing: 23.09.2022
(51) Int. Cl.: A23P 30/00, G05B 19/423

(54) **A METHOD AND APPARATUS FOR APPLYING FEED STUFF IN A PATTERN**

(71) Applicant: Pinecone Automation ApS, 7400 Herning (DK)
(72) Inventor: Riis, Martin Gordon, 6960 Hvide Sande (DK)
(74) Representative: Patrade A/S

(57) **Abstract**

A method (1000) for recording application of a pattern of feed stuff to an item (10), the method (1000) comprises steps of
- providing (1100) a feed dispenser (20) comprising a handheld nozzle (22), a feed reservoir (24); and a valve (26) for regulating a flow of feed stuff from the feed reservoir (24) through the handheld nozzle (22);
- attaching (1200) a motion track unit (30) to the handheld nozzle (22);
- applying (1300) feed stuff in a pattern to the item (10) manually, where the step of applying (1300) includes a step of orienting (1310) the handheld nozzle (22) and a step of controlling (1320) the valve (26) between two valve states being
an open state where feed stuff flow through the handheld nozzle (22); and
a closed state where feed stuff does not flow through the handheld nozzle (22);

- recording (1400) movement of the motion track unit (30) and the valve state during the step of applying (1300); and
- storing (1500) a recording of the movement and the valve state on a computer readable medium.

## Description

### Field of the Invention

The present invention relates to a method and an apparatus for recording applications of a pattern of feed stuff to an item and for applying a pattern of feed stuff to an item as a function of a recording.

### Background of the Invention

It is often desirable to portion and apply different types of foodstuffs in a pattern to various items, such as cakes, pies, or trays for arranging dishes, in the food industry. To accomplish this, present day food industries utilize different approaches.

Large scale food production utilizes large, automated machinery e.g., robots for applying portions of foodstuff in a pattern to items. These robots are programmed to perform a motion that applies a specific pattern and portion to a specific item. The automated production provides the ability to produce large quantities of one product in a timely and efficient manner.

Small scale food production utilizes manual labor for applying portions of foodstuff in a pattern to items. The manual labor are skilled professionals who can apply a variety of different patterns and portions of foodstuff to various items. The manual production provides a great versatility in the portfolio of patterns, portions and items that can be produced.

These approaches have each their own downsides; where switching between different patterns and portions to be applied on different items may be a costly affair both in terms of time and expenses for designing the large, automated machinery, where the manual production is expensive and ineffective.

Furthermore, the application of a pattern to an item by means of an encoded motion is more static and thus will produce a more static result, where a skilled professional will apply the pattern with a more organic motion and thus will produce a more organic result.

The problem with present day solutions is that they are either rigid to switch different patterns or are expensive and inefficient, and it is difficult to encode a motion that mimic the motion of a skilled professional for achieving the same organic result.

There is a need in the art for a method and an apparatus for applying a pattern of different types of foodstuffs to various item, that is easy to adjust so that a variety of different patterns can be applied, and one that is able to mimic the motion of a skilled professional.

### Object of the Invention

The object of the invention is to provide a method and an apparatus for applying a pattern of different types of foodstuffs to various item that is easy to adjust so that a variety of different patterns can be applied. A further object of the invention is to provide a method and an apparatus that can mimic the motion of a skilled professional.

### Description of the Invention

An object of the invention is achieved by a method for recording application of a pattern of feed stuff to an item. The method comprises steps of
- providing a feed dispenser that comprises a handheld nozzle, a feed reservoir, and a valve for regulating a flow of feed stuff from the feed reservoir through the handheld nozzle;
- attaching a motion track unit to the handheld nozzle;
- applying feed stuff in a pattern to the item manually, where the step of applying includes a step of orienting the handheld nozzle and a step of controlling the valve between two valve states. The two valve states being an open state where feed stuff flows through the handheld nozzle, and a closed state where feed stuff does not flow through the handheld nozzle;
- recording movement of the motion track unit and the valve state during the step of applying; and
- storing a recording of the movement and the valve state on a computer readable medium.

The manual application of feed stuff in a pattern to an item may be performed by a skilled professional, who can apply feed stuff in a pattern with a complex and an organic motion. The pattern is created with great skill and precision due to the skilled professional having a feel of the texture and viscosity of the feed stuff during application. Thereby the skilled professional executes great control over the feed stuff flowing through the handheld nozzle and the pattern applied.

By recording the movement while a skilled professional manually applies feed stuff in a pattern to an item, it is possible to replicate the skill and precision along with the organic motion performed by the skilled professional.

The feed stuff is characterized by having a texture and a viscosity. The texture and viscosity of the feed stuff may vary between different types of feed stuff; however, one type of feed stuff may also behave differently from one time to the next, even when it is mixed from the same ingredients. The differences may arise from small variations in mixing, temperature, moisture, or a combination thereof. Thus, the skilled professional may need to make slight adjustments when applying the feed stuff depending on the feel of the feed stuff.

The recording of the valve state may be a recording of the skilled professional manually controlling the valve state during application of feed stuff to an item. Thereby it is possible to imitate the feel that the skilled professional has of the feed stuff during application.

In some embodiments, the valve state may be controlled manually by pushing a button placed on the handheld nozzle.

The step of recording the valve state may also include a step of recording the flow rate of the feed stuff flowing from the feed reservoir through the handheld nozzle. Thereby it is possible to reproduce the flow of feed stuff employed during the manual application or in a later production or at another location or on another machine.

The flow rate of the feed stuff may be adjusted manually during application of feed stuff by the skilled professional. Thereby it is possible to control the amount of feed stuff that is deposited onto the item at different times during the application of the pattern.

An advantage of the method is that the method may be trained by a skilled professional to apply a pattern of feed stuff to an item. Thereby, it is possible to replicate the complex and organic motion performed by the skilled professional when applying feed stuff in a pattern and to imitate the feeling that the skilled professional has with the feed stuff.

The method may be utilized in the production of a variety of small batches of different items applied a pattern of feed stuff. The recording of new movements and valve states may be quick and easy, compared to a programmed robotic arm or programmed machine, which will be time consuming and expensive to program to perform a new movement, and the new movement will not be as fluid and complex as the solution of the present invention.

Thereby it is possible to change the settings of the method to another item and pattern of feed stuff in a time efficient and inexpensive manner.

An advantage of this is that it is easy to switch between recordings and thus between different items, feed stuffs and patterns in a production, such that the automation of small-scale production becomes feasible.

Another advantage of the method is that the recording of the movement may replicate a hand movement which may be a more organic motion than that of a programed motion which may be more static.

By replicating the movement of a skilled professional when applying a pattern of feed stuff to an item, the quality of the finished product may be increased compared to manual production, since the reproducibility is improved, and compared to a programmed motion, since its movement is more limited and static.

Another advantage of this method is that the number of skilled professionals needed for a manual production may be reduced. Thereby the production may not suffer during periods of labour shortage, and the production may be more cost efficient.

The item may be an eatable substance such as a cake, a pie, or the like. It may also be a tray or a box for preparing and/or arranging meals and/or ready meals in, or any other item on which one would desire to create a pattern of feed stuff.

The valve may be placed within the handheld nozzle. Thereby a greater control of the valve and of the portion of feed stuff applied to the item is obtained, and a faster response from changing the valve state until a change in the flow of feed stuff occur is obtained.

In some embodiments, the feed dispenser may comprise a pressure tank for pushing feed stuff from the feed reservoir through the handheld nozzle. Thereby a desired pressure is maintained in the feed reservoir ensuring a constant and even flow of feed stuff from the feed reservoir through the handheld nozzle.

In some embodiments, the valve may be replaced with a feed pump for pumping feed stuff from the feed reservoir through the handheld nozzle. In such an embodiment, the step of controlling may be a step of controlling a dispensing speed through the handheld nozzle. Thereby the flow rate of feed stuff from the reservoir through the handheld nozzle can be controlled and adapted to different flow rates during the application.

The motion track unit may be attached to any part of the handheld nozzle as long as a correlation between the movement of the motion track unit and the handheld nozzle exists.

In some embodiments, the motion track unit may be attached at the top of the handheld nozzle.

The step of recording the valve state may be a step of recording the valve state as a function of time, where a sequence of timespans, in which the valve is either in the open state or the closed state, is recorded to control the amount of the feed stuff applied to the item.

The recording may at an apparatus then be transformed by a controller of an apparatus such that a robotic arm will replicate the movement and valve state of the recording. Simplified, the controller translates the recording into instructions for the robotic arm and valve such that the application is copied.

In an aspect of the method, wherein the step of orienting may include moving the handheld nozzle along a vertical axis and/or a horizontal plane and/or rotating the handheld nozzle while applying the feed stuff.

The step of orienting may include angling the handheld nozzle relative to the item. Thereby it is possible to perform more complex and organic movements with the handheld nozzle during the step of applying and obtain more complex patterns.

In some cases, the application may be very simple as it only requires moving the handheld nozzle along one direction. However, the method and apparatus described later can also perform the very simple task as well as the very complex task. There is no real difference for a skilled practitioner recording the movement and valve state.

In an aspect of the method, wherein the feed stuff may have a viscosity that allows application in a pattern to an item such as butter cream or frosting or royal icing or mashed potatoes.

The feed stuff may be characterized by having a texture and a viscosity, that may vary between different types of feed stuff. Some textures and viscosities of feed stuff may require greater skill than others to apply in a pattern.

The same type of feed stuff may behave differently from one time to the next, even when comparing feed stuff mixed from the same ingredients, where the differences may arise from small variations in the mixing or temperature or moisture or a combination thereof. These small variations may result in differences in texture and viscosity of the feed stuff.

Thus, the application of feed stuff in a pattern may depend on the feel of the feed stuff at a given time. Thereby the skilled professional may need to make slight adjustments when applying the feed stuff depending on the feel of the feed stuff.

The recording of movement, valve state and flow rate may be dependent on the texture and viscosity of the feed stuff as well as the feel of the feed stuff at a given time.

An advantage of the method is that by imitating the feel of the feed stuff that the skilled professional has acquired, it is possible to also apply the types of feed stuff that require greater skill. The recording is then used for instructing an apparatus to replicate the application of feed stuff such that the apparatus gains the skill of the skilled professional/practitioner without the skilled professional/practitioner writing any code.

A person skilled in the art would know which types of feed stuff that has a viscosity allowing application in a pattern.

In an aspect of the method, wherein the step of recording may include using one or more sensors for following the motion of the motion track unit.

Thereby it is possible to record the complex and organic motion performed by the skilled professional when applying feed stuff in a pattern to an item.

In some embodiments, the step of recording may include using one or four sensors.

In some embodiments, the motion track unit may be attached at the top of the handheld nozzle. Thereby it is ensured that a direct line without occlusions between the one or more sensors and the motion track unit is obtained.

The step of recording may be a step of recording the movement of the motion track unit by means of virtual reality technology or motion capture technology. Thereby obtaining a recording of the exact movement of the skilled professional.

The step of recording may be a step of recording the movement of the motion track unit by means of positional tracking such as optical tracking, inertial tracking, acoustic tracking, magnetic tracking, or a combination thereof. Thereby the sensors may register the motion, the position, and the orientation in space, of the motion track unit. The means of positional tracking may involve virtual reality technology.

In some embodiments, the one or more sensors may be infrared sensors that follow the motion track unit by detecting infrared light emitted or reflected by the motion track unit.

In some embodiments, the one or more sensors may be electromagnetic sensors that follow the motion track unit by detecting magnetic field anomalies from the electromagnetic field generated by the motion track unit.

In an aspect of the method, wherein the steps of applying, recording, and storing may be repeated two or more times, such that the computer readable medium may comprise two or more recordings.

An advantage of this is that the two or more recordings may be of different movements resulting in different patterns of feed stuff on the item.

An object of the invention is achieved by a method for applying a pattern of feed stuff to an item. The method comprises steps of
- providing a feed dispenser that comprises a nozzle, a feed reservoir, and a valve for regulating a flow of feed stuff from the feed reservoir through the nozzle, wherein the valve is configured to change between two valve states. The two valve states being an open state where feed stuff flow through the nozzle, and a closed state where feed stuff does not flow through the nozzle;
- attaching the nozzle to a robotic arm;
- providing a computer readable medium having stored thereon a recording of a movement and a valve state;
- applying feed stuff in a pattern to an item as a function of the recording using the robotic arm.

The method for applying feed stuff may have at least the same settings as the settings for the method for recording application of feed stuff, in order to produce an exact replication of the pattern of feed stuff applied to the item by the skilled professional.

By applying feed stuff as a function of the recording the complex and organic movement of the skilled professional may be replicated. Thereby it is possible to replicate the skill and precision along with the organic motion performed by the skilled professional.

The recording of the valve state may be a recording of the skilled professional manually controlling the valve state during application of feed stuff to an item. Thereby it is possible to imitate the feel that the skilled professional has of the feed stuff during application.

An advantage of this is that by applying feed stuff in a pattern to an item as a function of a recording that replicates the movement and feel of a skilled person, a greater precision of the resulting pattern and a more complex pattern may be achieved.

The method may be utilized in the production of a variety of small batches of different items applied a pattern of feed stuff. The recording of new movements and valve states may be quick and easy, compared to a programmed robotic arm or a programmed machine, which will be time consuming and expensive to program to perform a new movement, especially when the new movement is complex and fluid as the solution of the present invention.

Thereby it is possible to change the settings of the method to another item and pattern of feed stuff in a time efficient an inexpensive manner.

An advantage of this is that it is easy to switch between recordings and thus between different items, feed stuffs and patterns in a production, such that the automation of small-scale production becomes feasible.

Another advantage of the method is that the recording of the movement may replicate a hand movement which may be a more organic motion than that of a programmed motion which may be more static.

By replicating the movement of a skilled professional when applying a pattern of feed stuff to an item, the quality of the finished product may be increased compared to manual production, since the reproducibility is improved, and compared to a programmed motion, since its movement is more limited and static.

Another advantage of this method is that the number of skilled professionals needed for a manual production may be reduced. Thereby the production may not suffer during periods of labour shortage, and the production may be more cost efficient.

The item may be an eatable substance such as a cake, a pie, or the like. It may also be a tray or a box for preparing and/or arranging dishes in, or any other item on which one would desire to create a pattern of feed stuff.

The valve may be placed within the nozzle. Thereby a greater control of the valve and of the portion of feed stuff applied to the item is obtained, and a faster response from changing the valve state until a change in the flow of feed stuff occur is obtained.

In some embodiments, the feed dispenser comprises a pressure tank for pushing feed stuff from the feed reservoir through the nozzle. Thereby a desired pressure is maintained in the feed reservoir ensuring a constant and even flow of feed stuff from the feed reservoir through the handheld nozzle.

In some embodiments, the valve may be replaced with a feed pump for pumping feed stuff from the feed reservoir through the nozzle. Thereby the flow rate of feed stuff from the reservoir through the handheld nozzle can be controlled and adapted to different flow rate during the application.

The robotic arm may be a five-axis or a six-axis or seven-axis robotic arm. Thereby the robotic arm's degree of freedom may be sufficient for replicating a recorded movement.

An object of the invention is achieved by an apparatus for applying a pattern of feed stuff to an item. The apparatus comprises
- a feed dispenser that comprises a nozzle, a feed reservoir, and a valve for regulating a flow of feed stuff from the feed reservoir through the nozzle; wherein the valve is configured to change between two valve states. The two valve states being an open state where feed stuff flow through the nozzle, and a closed state where feed stuff does not flow through the nozzle;
- a robotic arm that is adapted for holding the nozzle; and
- a controller that is configured for storing a recording of a movement and a valve state of a first pattern application on a computer readable medium, wherein the controller causes the feed dispenser and the robotic arm to replicate the movement and the valve state as a function of the recording.

The controller causes the feed dispenser and the robotic arm to replicate the recording of the movement of a skilled professional manually applying feed stuff in a pattern to an item. Thereby it is possible for the apparatus to replicate the skill and precision along with the organic motion performed by the skilled professional.

The recording of the valve state may be a recording of the skilled professional manually controlling the valve state during application of feed stuff to an item. Thereby the apparatus may imitate the feel that the skilled professional has of the feed stuff during application.

In some embodiments, the valve state may be controlled manually by pushing a button placed on the handheld nozzle.

The recording of the valve state may also include a recording of the flow rate of the feed stuff flowing from the feed reservoir through the handheld nozzle. Thereby the apparatus may reproduce the flow of feed stuff employed during the manual application or in a later production or at another location.

An advantage of the apparatus is that it may be configured for replicating the movement of a skilled professional applying a pattern of feed stuff to an item. Thereby, it may replicate the complex and organic motion performed by the skilled professional when applying feed stuff in a pattern and it may imitate the feeling that the skilled professional has with the feed stuff.

The apparatus may be utilized in the production of a variety of small batches of different items applied a pattern of feed stuff. The controller may quickly and easily implement a new recording of movement and valve state, compared to a programmed robotic arm or programmed machine, which will be time consuming and expensive to program to perform a new movement and the new movement will not be as fluid and complex as the solution of the present invention.

Thereby it is possible to change the settings of the apparatus to another item and pattern of feed stuff in a time efficient an inexpensive manner.

An advantage of this is that it is easy to switch between recordings and thus between different items, feed stuffs and patterns in a production, such that the automation of small-scale production becomes feasible.

Another advantage of the apparatus is that it may replicate a hand movement of a skilled professional which may be a more organic motion than the one of a programmed motion which may be more static.

By replicating the movement of a skilled professional when applying a pattern of feed stuff to an item, the quality of the finished product may be increased compared to manual production, since the reproducibility is improved, and compared to a programmed motion, since its movement is more limited and static.

Another advantage of this apparatus is that the number of skilled professionals needed for a manual production may be reduced. Thereby the production may not suffer during periods of labour shortage, and the production may be more cost efficient.

The item may be an eatable substance such as a cake, a pie, or the like. It may also be a tray or a box for preparing and/or arranging meals and/or ready meals in, or any other item on which one would desire to create a pattern of feed stuff.

The valve may be placed within the nozzle. Thereby a greater control of the valve and of the portion of feed stuff applied to the item is obtained, and a faster response from changing the valve state until a change in the flow of feed stuff occur is obtained.

In some embodiments, the feed dispenser comprises a pressure tank for pushing feed stuff from the feed reservoir through the nozzle. Thereby a desired pressure is maintained in the feed reservoir ensuring a constant and even flow of feed stuff from the feed reservoir through the handheld nozzle.

In some embodiments, the valve may be replaced with a feed pump for pumping feed stuff from the feed reservoir through the nozzle. Thereby the flow rate of feed stuff from the reservoir through the handheld nozzle can be controlled and adapted to different flow rates during the application.

The robotic arm may be a five-axis or a six-axis or seven-axis robotic arm. Thereby the robotic arm's degree of freedom may be sufficient for replicating the recorded movement.

In an aspect of the apparatus, wherein the apparatus may further comprise
- a motion detection unit that may comprise a motion track unit attachable to a handheld nozzle and one or more sensors for recording movement of the motion track unit during the first pattern application;
- an activation unit for manually controlling the valve state during the first pattern application;
- a controller for storing the recording of the movement of the motion track unit and the valve state during the first pattern application on a computer readable medium.

The motion track unit may be attached to any part of the handheld nozzle as long as a correlation between the movement of the motion track unit and the handheld nozzle exists.

In some embodiments, the motion track unit may be attached at the top of the handheld nozzle. Thereby it is ensured that a direct line without occlusions between the one or more sensors and the motion track unit is obtained.

The motion detection unit may apply virtual reality technology or motion capture technology for tracking the movement of the handheld nozzle. Thereby obtaining a recording of the exact movement of the skilled professional.

The motion detection unit may apply positional tracking such as optical tracking, inertial tracking, acoustic tracking, magnetic tracking, or a combination thereof for tracking the movement of the handheld nozzle. Thereby the sensors may register the motion, the position, and the orientation in space of the motion track unit.

In some embodiments, the one or more sensors may be infrared sensors that follow the motion track unit by detecting infrared light emitted or reflected by the motion track unit.

In some embodiments, the one or more sensors may be electromagnetic sensors that follow the motion track unit by detecting magnetic field anomalies from the electromagnetic field generated by the motion track unit.

In some embodiments, one sensor may be used for recording movement of the motion track unit.

In some embodiments, four sensors may be used for recording movement of the motion track unit.

The recording of the valve state may be a recording of the skilled professional manually controlling the valve state during application of feed stuff to an item. Thereby the apparatus may imitate the feel that the skilled professional has of the feed stuff during application.

An advantage of this is that a greater precision is obtained when the apparatus applies feed stuff in a pattern to an item as a function of the recording.

In an aspect of the apparatus, wherein the nozzle may comprise an outlet equipped with a piping nozzle tip.

An advantage of this is that the piping nozzle tip may be replaced with a variety of different piping nozzle tips adapted for creating different patterns. Thereby a variety of different patterns may be obtained with the same recording.

In an aspect of the apparatus, wherein the controller may further be configured for storing two or more recordings and the controller further configured to cycle between the two or more recordings.

An advantage of this is that the two or more recordings may be of different movements resulting in different patterns of feed stuff.

The controller may cycle between two or more recordings when applying feed stuff to a single item, such that two or more different patterns are applied to a single item. The controller may also cycle between two or more recordings when applying feed stuff to two or more items, such that a different pattern is applied to each item.

In an aspect of the apparatus, wherein the apparatus may comprise
- a conveyor for transportation of the items and a vision system adapted for identifying the items on the conveyor. The controller may be further adapted for causing the robotic arm to apply feed stuff to the item while the item moves along the conveyor; and/or

- a grid for creating a grid pattern of items. The controller may be further adapted for causing the robotic arm to apply feed stuff to the items placed within the grid.

In some embodiments the conveyor may be a conveyor comprising magnets for transporting the items by means of magnetic force.

An advantage of this is that the apparatus can apply feed stuff to both moving and static items.

In some embodiments, a recording may be of applying feed stuff to items placed within a grid at all grid positions. The controller may be further adapted for applying feed stuff to one grid of items at the time as a function of the recording.

In some embodiments, a recording may be of applying feed stuff to an item at one grid position, where each grid position may be programmed in the controller. The controller may be further adapted for applying feed stuff to items placed with in the grid at each grid position as a function of the recording.

In some embodiments, grid centres of each grid position may be programmed in the controller, and the controller may be further adapted for applying feed stuff to items placed within the grid at each grid centre as a function of any recording.

Thereby one recording may be repeated multiple times, and thus only one recording may be needed for one or more production runs.

In an aspect of the apparatus, wherein the apparatus may comprise two or more nozzles.

An advantage of this is that the different types of feed stuff or feed stuff of different colours, or one or more patterns may be applied to a single item simultaneously.

In an aspect of the apparatus, wherein the nozzle and handheld nozzle may be the same nozzle.

In some embodiments, the handheld nozzle for recording movement may be attached to the robotic arm for applying feed stuff to an item as a function of the recording.

An advantage of this is that the replication of the pattern of food stuff applied to the item as a function of the recording may be more precise.

In some embodiments, the handheld nozzle for recording movement may have a twin nozzle attached to the robotic arm for applying feed stuff to an item as a function of the recording.

An advantage of this is that new movements may be recorded with the handheld nozzle simultaneously with the twin applying feed stuff in a pattern to items as a function of the recording. Another advantage of this is that switching to newly recorded movements may become faster.

An object of the invention is achieved by a computer program product comprising instructions to cause the apparatus to perform the method.

The computer program may comprise or have access to one or more recordings, wherein said recordings are recorded according to anyone of claims 1-5 or any of the embodiments described above.

An object of the invention is achieved by a computer readable medium having stored thereon the computer program product.

The computer readable medium may comprise one or more recordings, wherein said recordings are recorded according to anyone of claims 1-5 or any of the embodiments described above.

### Description of the Drawing

Embodiments of the invention will be described in the figures, whereon:
- Fig. 1: illustrates a handheld nozzle having a motion track unit attached.
- Fig. 2: illustrates a method according to the invention for recording application of a pattern of feed stuff to an item.
- Fig. 3: illustrates a front view of an apparatus according to the invention for applying a pattern feed stuff to an item.
- Fig. 4: illustrates a front perspective view of an apparatus according to the invention for applying a pattern feed stuff to an item.
- Fig. 5: illustrates a side perspective view of an apparatus according to the invention for applying a pattern feed stuff to an item.
- Fig. 6: illustrates a side view of an apparatus according to the invention for applying a pattern feed stuff to an item.
- Fig. 7: illustrated a method according to the invention for applying a pattern of feed stuff to an item
- Fig. 8: illustrates a grid for creating a grid pattern of items, where A illustrates a recording at all grid positions, B illustrates a recording at one grid position, and C illustrates encoded grid centres.

### Detailed Description of the Invention

| **Item** | **No** |
|---|---|
| Item | 10 |
| Feed dispenser | 20 |
| Handheld nozzle | 22 |
| Feed reservoir | 24 |
| Valve | 26 |
| Nozzle | 28 |
| Motion track unit | 30 |
| Sensors | 351, 3511, 35III |
| Robotic arm | 40 |
| Controller | 50 |
| Activation unit | 70 |
| Conveyor | 80 |
| Vision system | 85 |
| Grid | 90 |
| Grid Centre | 92 |
| Inlet | 210 |
| Outlet | 220 |
| Method | 1000 |
| Providing | 1100 |
| Attaching | 1200 |
| Applying | 1300 |
| Orienting | 1310 |
| Controlling | 1320 |
| Recording | 1400 |
| Storing | 1500 |
| Apparatus | 2000 |

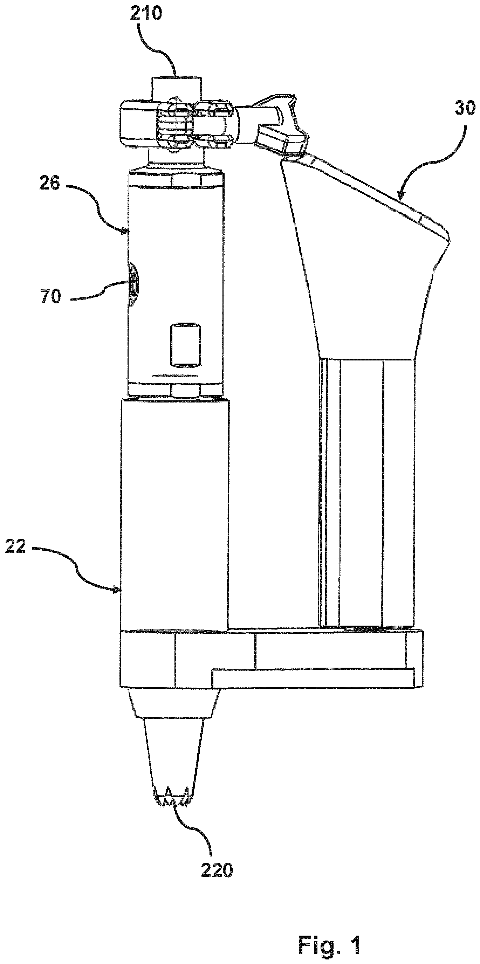

Figure 1 illustrates a handheld nozzle 22 that comprises an inlet 210 and an outlet 220, where the outlet 220 may be a piping nozzle tip for creating a grooved pattern in feed stuff flowing through the outlet 220. The handheld nozzle 22 is connected to a valve 26 for regulating a flow of feed stuff from a feed reservoir 24 through the handheld nozzle 22. The valve 26 has an activation unit 70 for manually controlling the valve 26, wherein the valve 26 is configured to change between two valve states that comprise an open state where feed stuff flow through the handheld nozzle 22 and a closed state where feed stuff does not flow through the handheld nozzle 22. The handheld nozzle 22 has a motion track unit 30 attached for recording the movement of the handheld nozzle 22.

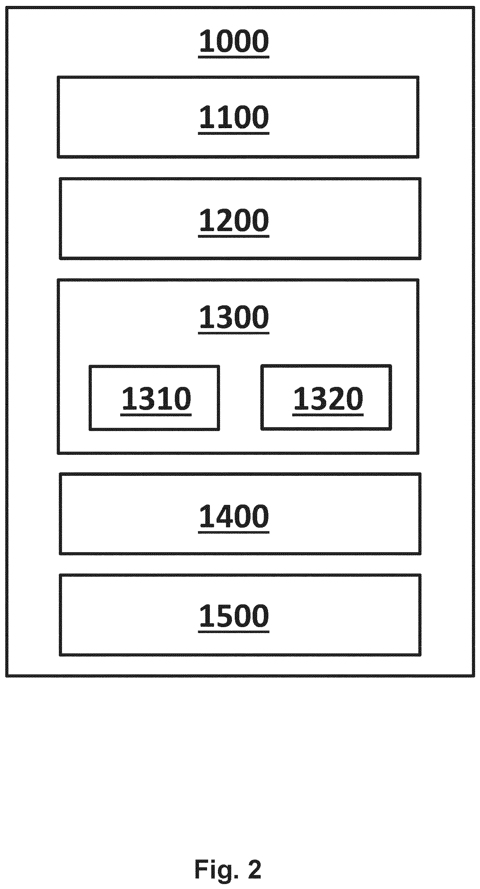

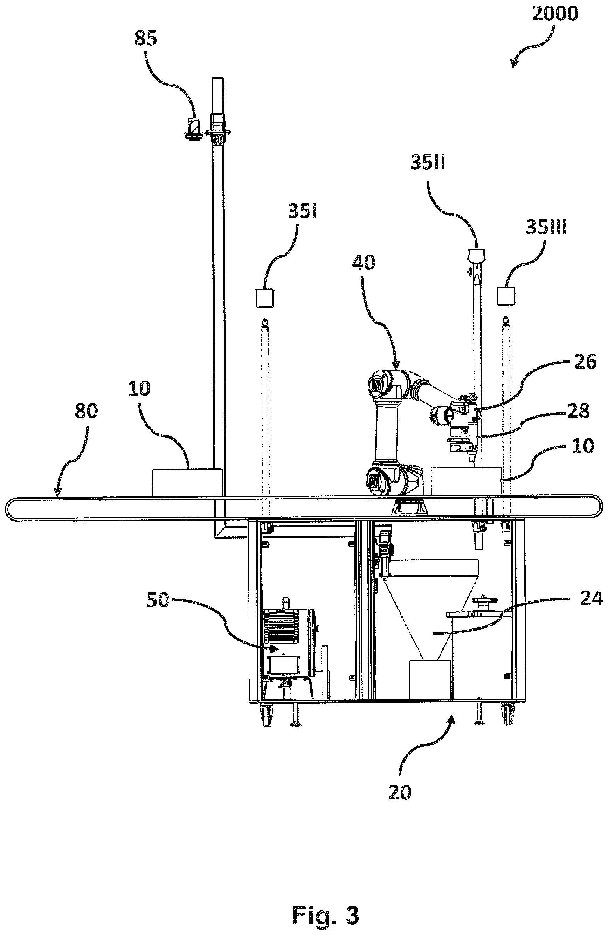

Figure 2 illustrates a method 1000 according to the invention for recording application of a pattern of feed stuff to an item 10. The method 1000 provides a feed dispenser 20 (shown in figure 3) during the step of providing 1100, where the feed dispenser 20 comprises a handheld nozzle 22, a feed reservoir 24 and a valve 26 that regulates a flow of feed stuff from the feed reservoir 24 through the handheld nozzle 22 (shown in figure 1 and 3).

The step of providing 1200 is followed by a step of attaching 1200, where a motion track unit 30 is attached to the handheld nozzle 22 (shown in figure 1) for recording a movement of the handheld nozzle 22. This is followed by a step of manually applying 1300 feed stuff in a pattern to the item 10, where a skilled professional applies a pattern of feed stuff to an item with the handheld nozzle 22 having the motion track unit attached 30.

The step of applying 1300 includes a step of orienting 1310 the handheld nozzle 22, where the handheld nozzle 22 may be moved along a vertical axis, a horizontal plane, and angled relative to the item 10. Thereby enabling more complex and organic movements with the handheld nozzle 22.

The step of applying 1300 also includes a step of controlling 1320 the valve 26 (shown in figure 1), where a skilled professional manually controls an activation unit 70 (shown in figure 1) that is comprised within the valve 26. The activation unit 70 can manually change between the two valve states, which comprise an open state where feed stuff flow through the handheld nozzle 22 and a closed state where feed stuff does not flow through the handheld nozzle 22.

The step of applying 1300 is followed by a step of recording 1400, where movement of the motion track unit 30 and the valve state during application of a pattern of feed stuff to an item 10 by a skilled professional is recorded. The recording of the movement and the valve state is stored on a computer readable medium during the step of storing 1500.

The step of recording 1400 may include using one or more sensors 351, 3511, 35III for following the motion of the motion track unit 30 (shown in figure 1 and 3).

Figure 3 illustrates a front view of an apparatus 2000 according to the invention for applying a pattern of feed stuff to an item 10.

The apparatus 2000 comprises a feed dispenser 20 that comprises a nozzle 28 connected to a feed reservoir 24 and a valve 26. The valve 26 regulates the flow of feed stuff from the feed reservoir 24 through the nozzle 28 onto the item 10. The valve 26 is configured to change between two valve states that comprises an open state where feed stuff flow through the nozzle 28 and a closed state where feed stuff does not flow through the nozzle 28. The nozzle 28 shown in figure 2 may be the same nozzle as the handheld nozzle 22 shown in figure 1.

The apparatus 2000 further comprises a motion detection unit. The motion detection unit comprises a motion track unit 30 that is attachable to a handheld nozzle 22 and one or more sensors 351, 3511, 35III adapted for recording movement of the motion track unit 30 during the first pattern application.

The one or more sensors 351, 3511, 35III may be placed at any position that allows recording the movement of the motion track unit 30 and is thus not limited to the positions shown in figure 3.

When recording a movement of the first pattern application, the handheld nozzle 22 with the motion track unit 30 attached is operated externally to the robotic arm 40, and the handheld nozzle 22 is moved manually by a skilled professional. The movement of the motion track unit 30 during the first pattern application is recorded by the one or more sensors 35I, 3SII, 35III.

When recording the valve state of the first pattern application, the valve 26 with the activation unit 70 is manually controlled by the skilled professional during the recording.

The apparatus 2000 further comprises a controller 50 that is adapted for storing the recording of the movement of the motion track unit 30 and the valve state during the first pattern application on a computer readable medium.

The apparatus 2000 further comprises a robotic arm 40 that is adapted for holding the nozzle 28 and replicating a recorded movement. The nozzle 28 attached to the robotic arm may be the handheld nozzle 22 used for recording.

The controller 50 is further configured for causing the feed dispenser 20 and the robotic arm 40 to replicate the movement and the valve state as a function of the recording.

The apparatus 2000 further comprises a conveyor 80 for transporting the items 10 along a production line and a vision system 85 that is adapted for identifying the items 10 on the conveyor 80. The vision system 85 provide the controller 50 with information about position, size, and shape of the item 10 moving on the conveyor 80. The controller 50 is further adapted to cause the robotic arm 40 to apply feed stuff to the item 10 of a given size and shape as a function of a recording while the item 10 moves along the conveyor 80.

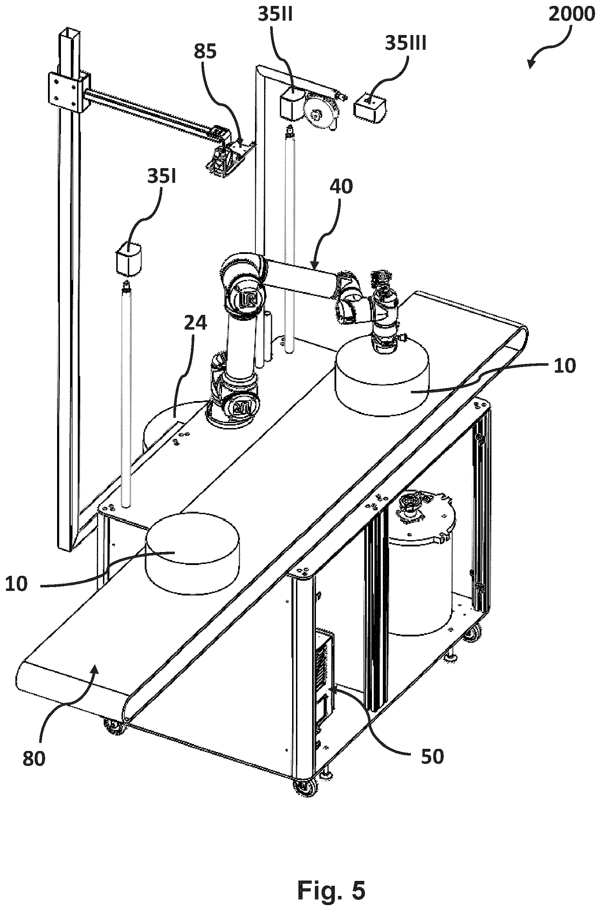

The apparatus 2000 shown in figure 3-5 is just one embodiment of the invention. The apparatus is not limited to have a conveyor 80 for transporting the items 10, other transportation options are also possible. The apparatus 2000 is also not limited to have a frame structure as the one illustrated in figures 3-5, other constructions and frame structures are also possible.

In some embodiments the conveyor 80 may be a conveyor 80 comprising magnets for transporting the items 10 by means of magnetic force.

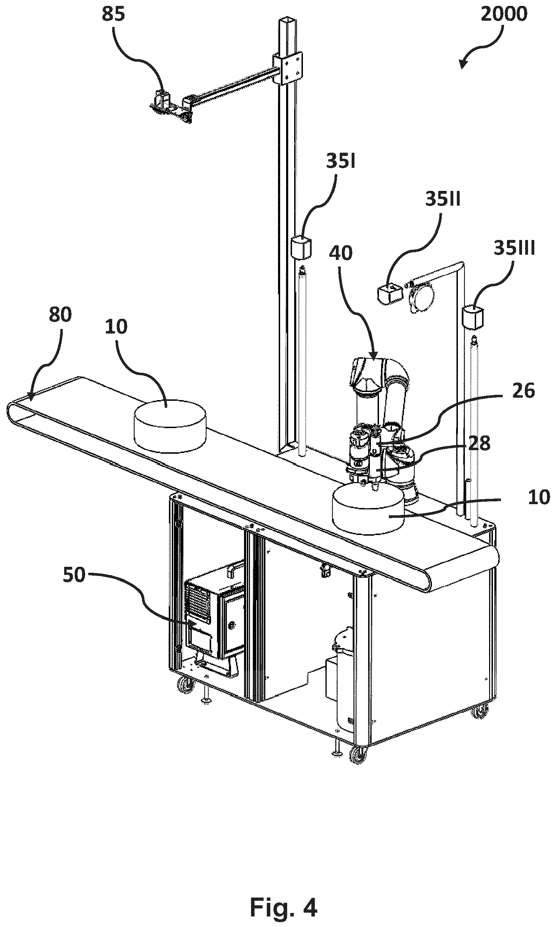

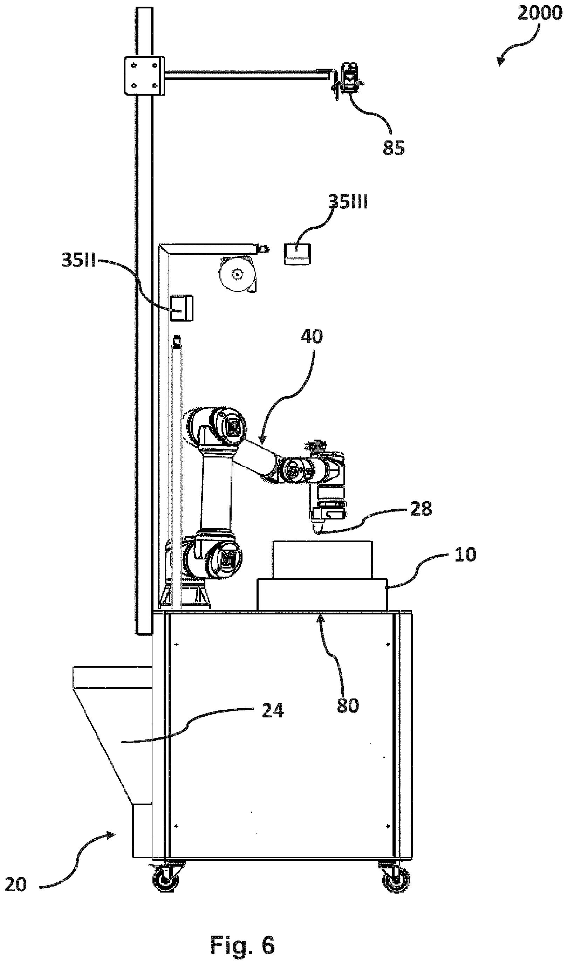

Figures 4, 5, and 6 illustrate different perspective views of the apparatus 2000 according to the invention for applying feed stuff in a pattern to an item as illustrated in figure 3.

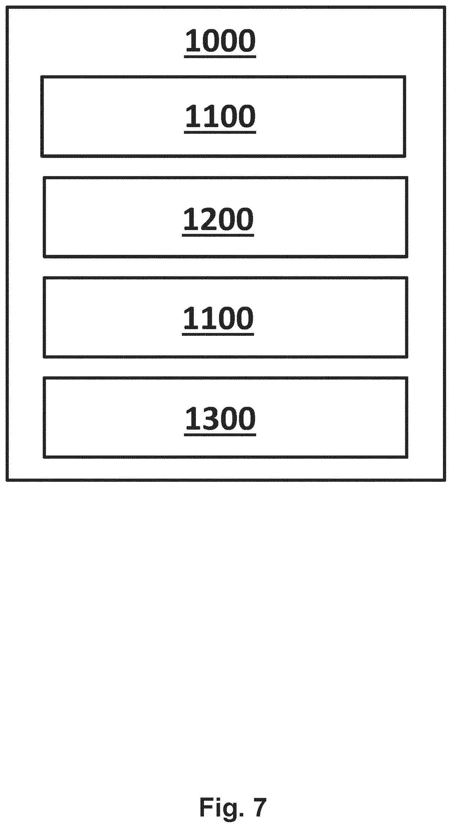

Figure 7 illustrates a method 1000 according to the invention for applying a pattern of feed stuff to an item 10 as a function of a recording. The method 1000 provides a feed dispenser 20 (shown in figure 3) during the step of providing 1100, where the feed dispenser 20 comprises a nozzle 28, a feed reservoir 24 and a valve 26 that regulates a flow of feed stuff from the feed reservoir 24 through the nozzle 28 (shown in figure 3). The valve 26 is configured for changing between two valve states that comprises an open state where feed stuff flow through the nozzle 28 and a closed state where feed stuff does not flow through the nozzle 28.

The step of providing 1100 is followed by a step of attaching 1200, where the nozzle 28 is attached to a robotic arm 40 (shown in figure 3), and a computer readable medium that has a recording of a movement and a valve state stored thereon is provided during a second step of providing 1100. This is followed by a step of applying 1300, where feed stuff is applied in a pattern to an item 10 as a function of the recording stored on the computer readable medium using the robotic arm 40.

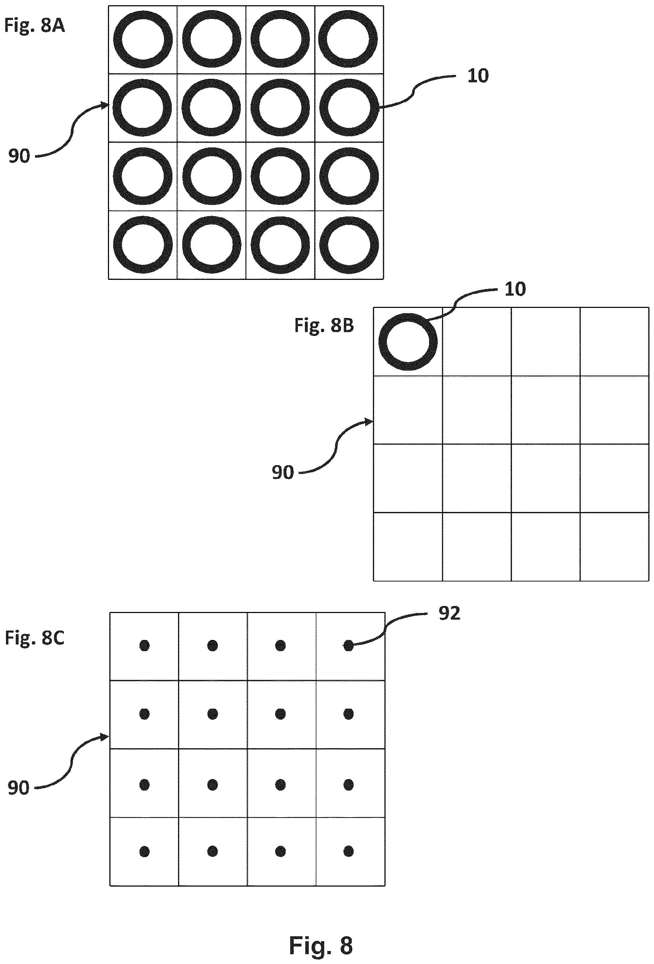

Figure 8 illustrates a grid 90 for creating a grid pattern of items 10, where the controller 50 is further adapted for causing the robotic arm 40 to apply feed stuff to the items 10 placed within the grid 80.

Figure 8A illustrates a grid 90 for creating a grid pattern of items 10, where an item 10 is placed at each grid position. A recording of applying feed stuff to items placed within the grid at all grid positions is recorded. The controller 50 is further adapted for applying feed stuff to one grid 90 of items at the time as a function of the recording.

Figure 8B illustrated a grid 90 for creating a grid pattern of items 10, where an item 10 is placed at one grid position and each grid position is encoded in the controller 50. A recording of applying feed stuff to the item 10 placed at one grid position is recorded.

The controller 50 is further adapted for applying feed stuff to items 10 placed within the grid 90 at each grid position as a function of the recording and the encoded grid positions.

Figure 8C illustrates a grid 90 for creating a grid pattern of items 10, where grid centres 92 of each grid position are encoded in the controller 50, and the controller 50 is further adapted for applying feed stuff to items 10 placed within the grid 90 at each grid centre 92 as a function of any recording.

## Claims

1. A method (1000) for recording application of a pattern of feed stuff to an item (10), the method (1000) comprises steps of
- providing (1100) a feed dispenser (20) comprising a handheld nozzle (22), a feed reservoir (24); and a valve (26) for regulating a flow of feed stuff from the feed reservoir (24) through the handheld nozzle (22);
- attaching (1200) a motion track unit (30) to the handheld nozzle (22);
- applying (1300) feed stuff in a pattern to the item (10) manually, where the step of applying (1300) includes a step of orienting (1310) the handheld nozzle (22) and a step of controlling (1320) the valve (26) between two valve states being
an open state where feed stuff flow through the handheld nozzle (22); and
a closed state where feed stuff does not flow through the handheld nozzle (22);
- recording (1400) movement of the motion track unit (30) and the valve state during the step of applying (1300); and
- storing (1500) a recording of the movement and the valve state on a computer readable medium.

2. A method (1000) according to claim 1, wherein the step of orienting (1310) includes moving the handheld nozzle (22) along a vertical axis and/or a horizontal plane and/or rotating the handheld nozzle while applying the feed stuff.

3. A method (1000) according to claim 1 or 2, wherein the feed stuff has a viscosity that allows application in a pattern to an item (10) such as butter cream or frosting or royal icing or mashed potatoes.

4. A method (1000) according to anyone of claims 1 to 3, wherein the step of recording (1400) includes using one or more sensors (351, 3511, 35III) for following the motion of the motion track unit (30).

5. A method (1000) according to anyone of claims 1 to 4, wherein the steps of applying (1300), recording (1400), and storing (1500) are repeated two or more times, such that the computer readable medium comprises two or more recordings.

6. A method (1000) for applying a pattern of feed stuff to an item (10), wherein the method (1000) comprises steps of
- providing (1100) a feed dispenser (20) comprising a nozzle (28), a feed reservoir (24) and a valve (26) for regulating a flow of feed stuff from the feed reservoir (24) through the nozzle (28); wherein the valve (26) is configured to change between two valve states being
an open state where feed stuff flow through the nozzle (28); and
a closed state where feed stuff does not flow through the nozzle (28);
- attaching (1200) the nozzle (28) to a robotic arm (40);
- providing (1100) a computer readable medium having stored thereon a recording of a movement and a valve state;
- applying (1300) feed stuff in a pattern to an item (10) as function of the recording using the robotic arm (40).

7. An apparatus (2000) for applying a pattern of feed stuff to an item (10), the apparatus (2000) comprises
- a feed dispenser (20) comprising a nozzle (28), a feed reservoir (24), and a valve (26) for regulating a flow of feed stuff from the feed reservoir (24) through the nozzle (28); wherein the valve (26) is configured to change between two valve states being
an open state where feed stuff flow through the nozzle (28); and
a closed state where feed stuff does not flow through the nozzle (28);
- a robotic arm (40) adapted for holding the nozzle (28);
- a controller (50) configured for storing a recording of a movement and a valve state of a first pattern application on a computer readable medium, wherein the controller (50) causes the feed dispenser (20) and the robotic arm (40) to replicate the movement and the valve state as a function of the recording.

8. An apparatus (2000) according to claim 7, wherein the apparatus (2000) further comprises
- a motion detection unit comprising a motion track unit (30) attachable to a handheld nozzle (22) and one or more sensors (351, 3511, 35III) for recording movement of the motion track unit (30) during the first pattern application;
- an activation unit (70) for manually controlling the valve state during the first pattern application;
- a controller (50) for storing the recording of the movement of the motion track unit (30) and the valve state during the first pattern application on a computer readable medium.

9. An apparatus (2000) according to claim 7 or 8, wherein the nozzle (28) comprises an outlet equipped with a piping nozzle tip.

10. An apparatus (2000) according to anyone of claims 7 to 9, wherein the controller (50) is further configured for storing two or more recordings and the controller (50) further configured to cycle between the two or more recordings.

11. An apparatus (2000) according to anyone of claims 7 to 10, wherein the apparatus (2000) comprises
- a conveyor (80) for transportation of the items (10) and a vision system (85) adapted for identifying the items (10) on the conveyor (80), and the controller (50) is further adapted for causing the robotic arm (40) to apply feed stuff to the item (10) while the item (10) moves along the conveyor (80), and/or
- a grid (90) for creating a grid pattern of items (10), and the controller (50) is further adapted for causing the robotic arm (40) to apply feed stuff to the items (10) placed within the grid (80).

12. An apparatus (2000) according to anyone of claims 7 to 11, wherein the apparatus (2000) comprises two or more nozzles (28).

13. An apparatus (2000) according to anyone of claims 7 to 12, wherein the nozzle (28) and handheld nozzle (22) are the same nozzle.

14. A computer program product comprising instructions causing the apparatus according to anyone of claims 7 to 13 to perform the method according to claim 6.

15. A computer readable medium having stored thereon the computer program product according to claim 14.
